# EUROPEAN PATENT APPLICATION

(11) **EP 4 274 292 A1**
(43) Date of publication of application: **08.11.2023**
(21) Application number: 21913121.6
(22) Date of filing: 17.08.2021
(51) Int. Cl.: H04W 24/02

(54) **COMMUNICATION TRANSMISSION METHOD, DEVICE AND SYSTEM**

(30) Priority: 31.12.2020 CN 202011630356
(71) Applicant: Datang Mobile Communications Equipment Co., Ltd., Beijing 100085 (CN)
(72) Inventor: SUN, Wanfei, Beijing 100085 (CN); HU, Weiqi, Beijing 100085 (CN); CHENG, Zhimi, Beijing 100085 (CN)
(74) Representative: Cabinet Nony
(86) International application number: PCT/CN2021/113089
(87) International publication number: WO 2022/142373

(57) **Abstract**

The embodiments of the present application disclose a communication transmission method, device and system, which are used for reducing the cost of a terminal and improving the flexibility of communication transmission. The system in the embodiments of the present application comprises: a terminal control plane entity, configured to perform signaling transmission with a network control plane device; a terminal user plane entity, configured to perform data transmission with a network user plane device; a network control plane device, configured to process and forward signaling sent from the terminal control plane entity; and a network user plane device, configured to process and forward data from the terminal user plane entity, wherein the terminal control plane entity and the terminal user plane entity are located in different devices. The method and system achieve separation of a terminal control plane and a terminal user plane, effectively reduce power consumption overheads, achieve independent operation and management, are more flexible, and effectively reduce interaction time delay and process time.

## Description

### Cross-Reference of Related Applications

The present application claims the priority from Chinese Patent Application No. 202011630356.5, filed with the Chinese Patent Office on December 31, 2020 and entitled "Communication Transmission Method, Device and System", which is hereby incorporated by reference in its entirety.

### Field of Invention

The present application relates to the field of wireless communication technology, and in particular to a communication transmission method, device and system.

### Background

At present, a communication terminal include a control plane and a user plane. The terminal control plane is responsible for interacting with the network control plane, the terminal user plane is responsible for transmitting data, and both are integrated in the terminal. However, in some scenarios such as the Internet of Things, the control and management requirements of the terminal are simple, and the main function of the terminal is to transmit data on the user plane. However, in the current situation where the control plane and the user plane are integrated in the terminal, there will be a problem that the terminal has relatively high complexity and cost in the communication transmission process, and a problem of relatively large interaction delay due to the long distance between the terminal control plane and the network control plane and the need for forwarding through other devices.

However, there is currently no efficient, flexible, and low-power communication transmission method.

### Brief Summary

Embodiments of the present application provide a communication transmission method, device and system, so as to provide convenience for terminal management, reduce the cost of the terminal, and improve the flexibility of communication transmission.

In a first aspect, a communication transmission system according to an embodiment of the present application includes:
a terminal control plane entity configured to perform a signaling transmission with a network control plane device;
a terminal user plane entity configured to perform a data transmission with a network user plane device;
a network control plane device configured to process and forward a signaling sent from the terminal control plane entity;
a network user plane device configured to process and forward a data from the terminal user plane entity;
where the terminal control plane entity and the terminal user plane entity are located in different devices.

The above method realizes the separation of the terminal control plane from the user plane, reduces the cost and power consumption of the terminal control plane and the user plane effectively, realizes the independent operation and management of the user plane and/or the control plane, and is more flexible and convenient. In addition, through the separation of the terminal control plane from the user plane, the terminal control plane can directly interact with the network control plane device, reducing the interaction delay and process time effectively.

In a possible implementation, the terminal control plane entity is in point-to-point connection with at least one network element in the network control plane device; or the terminal control plane entity is connected to the network control plane device through a service interface.

In a possible implementation, the connection manner inside the network control plane may be a point-to-point connection; or a connection through a service interface.

In a possible implementation, the terminal control plane entity is in point-to-point connection with a network element with an access function in the network control plane device.

In a possible implementation, the terminal user plane entity performs data transmission with the network user plane device through a wirelessly-connected access network device; and/or the terminal user plane entity performs data transmission with the network user plane device connected by wire.

In a possible implementation, terminal control plane entities are in one-to-one correspondence to terminal user plane entities; or a terminal control plane entity corresponds to a plurality of terminal user plane entities.

In a second aspect, a communication transmission method according to an embodiment of the present application includes:
sending, by the terminal control plane entity, a request information to the network control plane device; and receiving, by the terminal control plane entity, a request response fed back from the network control plane device.

The above method realizes the separation of the terminal control plane from the user plane, reduces the cost and power consumption of the terminal control plane and the user plane effectively, realizes the independent operation and management of the user plane and/or the control plane, and is more flexible and convenient. In addition, through the separation of the terminal control plane from the user plane, the terminal control plane can directly interact with the network control plane device, reducing the interaction delay and process time effectively.

In a possible implementation, the terminal control plane entity sends the request information to the network control plane device through a service interface; or the terminal control plane entity sends the request information to at least one network element in point-to-point connection with the network control plane device. In a possible implementation, the terminal control plane entity sends the request information to a network element with an access function in the network control plane device.

In a third aspect, a communication transmission method according to an embodiment of the present application includes:
determining, by the terminal user plane entity, target data; and transmitting, by the terminal user plane entity, the target data to the network user plane device.

The above method realizes the separation of the terminal control plane from the user plane, reduces the cost and power consumption of the terminal control plane and the user plane effectively, realizes the independent operation and management of the user plane and/or the control plane, and is more flexible and convenient. In addition, through the separation of the terminal control plane from the user plane, the terminal control plane can directly interact with the network control plane device, reducing the interaction delay and process time effectively.

In a possible implementation, the terminal user plane entity sends the target data to the network user plane device through a wirelessly-connected access network device; and/or the terminal user plane entity sends the target data to the network user plane device connected by wire.

In a fourth aspect, an embodiment of the present application provides a communication transmission device, including: a processor, a memory and a transceiver:
the processor is configured to read a program in the memory to:

send the request information to the network control plane device through a service interface; or send the request information to at least one network element in point-to-point connection with the network control plane device.

In a fifth aspect, an embodiment of the present application provides a communication transmission device, including: a processor, a memory and a transceiver:
the processor is configured to read a program in the memory to:
determine a target data; and send the target data to a network user plane device through a wirelessly-connected access network device; and/or send the target data to the network user plane device connected by wire.

In a sixth aspect, an embodiment of the present application further provides a terminal control plane entity, including:
at least one processing unit and at least one storage unit, where the storage unit stores program codes, and the program codes, when executed by the processing unit, cause the processing unit to execute the function of each embodiment of any aspect in the second aspect described above.

In a seventh aspect, an embodiment of the present application further provides a terminal user plane entity, including:
at least one processing unit and at least one storage unit, where the storage unit stores program codes, and the program codes, when executed by the processing unit, cause the processing unit to execute the function of each embodiment of any aspect in the third aspect described above.

In an eighth aspect, an embodiment of the present application further provides a terminal control plane entity, including:
a sending module configured to send a request information to a network control plane device through a service interface; or send a request information to at least one network element in point-to-point connection with the network control plane device;
a receiving module configured to receive a request response fed back from the network control plane device.

In a ninth aspect, an embodiment of the present application further provides a terminal user plane entity, including:
a processing module configured to determine a target data;
a transmission module configured to send the target data to a network user plane device through a wirelessly-connected access network device; and/or send the target data to the network user plane device connected by wire.

In a tenth aspect, an embodiment of the present application provides a chip system, including a processor and optionally a memory; where the memory is configured to store a computer program, and the processor is configured to call and run the computer program from the memory, so that a communication device equipped with the chip system executes any one of the second aspect or the third aspect, or any method in any possible implementation in the second aspect to the third aspect.

In an eleventh aspect, the present application further provides a computer storage medium storing a computer program thereon, where the program implements the steps of any method in the second aspect when executed by a processor.

In a twelfth aspect, the present application further provides a computer storage medium storing a computer program thereon, where the program implements the steps of any method in the third aspect when executed by a processor.

In a thirteenth aspect, an embodiment of the present application provides a computer program product including: a computer program code, which, when run by a communication unit and a processing unit or a transceiver and a processor of a communication device, causes the communication device to perform the second aspect or the steps of any method in the first aspect.

In a fourteenth aspect, an embodiment of the present application provides a computer program product including: a computer program code, which, when run by a communication unit and a processing unit or a transceiver and a processor of a communication device, causes the communication device to perform the third aspect or the steps of any method in the third aspect.

Furthermore, the technical effects brought about by any implementation in the third to fourteenth aspects can refer to the technical effects brought about by different implementations in the first to third aspects, and will not be repeated here.

### Brief Description of the Drawings

In order to illustrate the technical solutions in the embodiments of the present application more clearly, the accompanying figures which need to be used in describing the embodiments will be introduced below briefly. Obviously the accompanying figures described below are only some embodiments of the present application, and other accompanying figures can also be obtained by those ordinary skilled in the art according to these accompanying figures without creative labor.
FIG. 1 is a schematic diagram of an existing communication transmission system;
FIG. 2 is a schematic diagram of a communication system according to an embodiment of the present application;
FIG. 3 is a schematic flowchart of a communication transmission method according to an embodiment of the present application;
FIG. 4 is a schematic structural diagram of a first communication system according to an embodiment of the present application;
FIG. 5 is a schematic structural diagram of a second communication system according to an embodiment of the present application;
FIG. 6 is a schematic structural diagram of a third communication system according to an embodiment of the present application;
FIG. 7 is a schematic structural diagram of a fourth communication system according to an embodiment of the present application;
FIG. 8 is a schematic structural diagram of a fifth communication system according to an embodiment of the present application;
FIG. 9 is a schematic structural diagram of a sixth communication system according to an embodiment of the present application;
FIG. 10 is a schematic structural diagram of a seventh communication system according to an embodiment of the present application;
FIG. 11 is a schematic structural diagram of an eighth communication system according to an embodiment of the present application;
FIG. 12 is a schematic structural diagram of a ninth communication system according to an embodiment of the present application;
FIG. 13 is a schematic structural diagram of a tenth communication system according to an embodiment of the present application;
FIG. 14 is a schematic structural diagram of an eleventh communication system according to an embodiment of the present application;
FIG. 15 is a schematic structural diagram of a twelfth communication system according to an embodiment of the present application;
FIG. 16 is a schematic structural diagram of a thirteenth communication system according to an embodiment of the present application;
FIG. 17 is a schematic structural diagram of a fourteenth communication system according to an embodiment of the present application;
FIG. 18 is a schematic structural diagram of a fifteenth communication system according to an embodiment of the present application;
FIG. 19 is a schematic structural diagram of a sixteenth communication system according to an embodiment of the present application;
FIG. 20 is a schematic structural diagram of a seventeenth communication system according to an embodiment of the present application;
FIG. 21 is a schematic structural diagram of an eighteenth communication system according to an embodiment of the present application;
FIG. 22 is a schematic structural diagram of a communication transmission device according to an embodiment of the present application;
FIG. 23 is a schematic structural diagram of a terminal control plane entity according to an embodiment of the present application;
FIG. 24 is a schematic structural diagram of a terminal user plane entity according to an embodiment of the present application.

### Detailed Description of the Embodiments

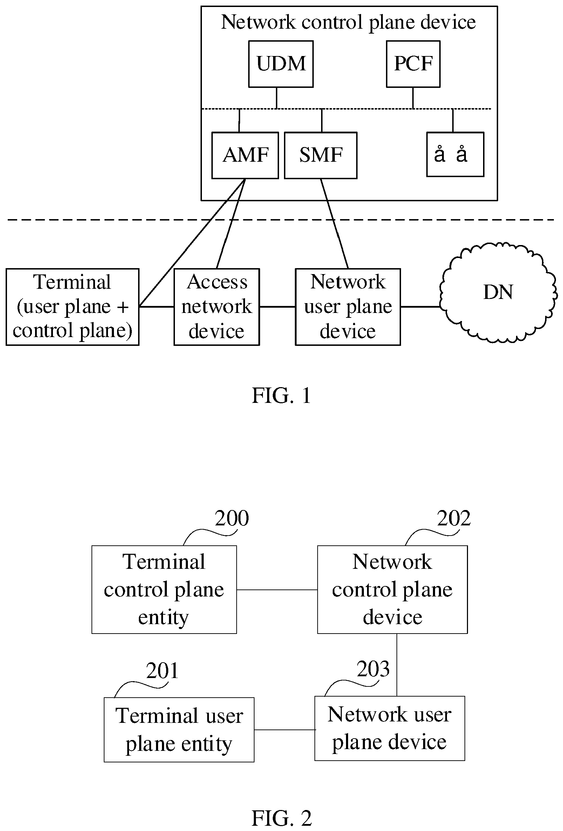

In the current communication terminal and system, as shown in FIG. 1, a control plane and a user plane are integrated in the terminal. For example, taking a 5G mobile communication system as an example, after the control plane in the terminal completes signaling interaction with a network control plane device, the user plane in the terminal performs data transmission with a network user plane device.

However, in some scenarios, the functions of the terminal control plane are not closely related to the functions of the user plane. For example, in the IoT scenario, the main function of the terminal is to transmit data through the user plane, and there is less demand for operations on the control plane in the terminal. However, since the control plane and the user plane are integrated in the same terminal, the control plane in the terminal will still generate overhead, which lacks flexibility and convenience for control operations of the terminal. In addition, since the control plane is in the terminal, the information sent to the network control plane often needs to be forwarded (for example, the 5G system needs transparent transmission and forwarding by the base station), resulting in a large delay and consumed time of the control process.

To sum up, there is currently no efficient, flexible, and low-power communication transmission method.

In order to solve the above problems, an embodiment of the present application provides a communication transmission method. The technical solution of the embodiment of the present application may be applied to various communication systems, for example: a communication system provided in an embodiment of the present application; or may be applied to the existing Global System for Mobile communications (GSM) system, Code Division Multiple Access (CDMA) system, Wideband Code Division Multiple Access (WCDMA) system, General Packet Radio Service (GPRS) system, Long Term Evolution (LTE) system, LTE Frequency Division Duplex (FDD) system, LTE Time Division Duplex (TDD) system, Universal Mobile Telecommunication System (UMTS), Worldwide Interoperability for Microwave Access (WIMAX) communication system, 5th Generation (5G) system or New Radio (NR) system; or may be applied to future communication systems or other similar communication systems, etc.

Taking the 5G system (also called new radio system) as an example, specifically the 5G system defines the new communication scenarios: Ultra-Reliable and Low-Latency Communication (URLLC), enhanced Mobile Broadband (eMBB) and massive Machine Type Communication (mMTC). These communication scenarios have stricter requirements on communication quality and power saving. Therefore, it is particularly important to realize the flexible, efficient and low-power communication transmission.

In order to facilitate understanding the embodiments of the present application, a communication system applicable to the embodiments of the present application is firstly described in detail by taking the communication system shown in FIG. 2 as an example.

As shown in FIG. 2, the communication system includes a terminal control plane entity 200, a terminal user plane entity 201, a network control plane device 202, and a network user plane device 203.

It should be noted that the communication system described in the embodiment of the present application may be a new communication system different from the existing communication systems, where the terminal user plane entity and the terminal control plane entity refer to logical functions, which may be separate hardware or a software instance running on the cloud in a specific implementation.

Here, the terminal control plane entity 200 is a device for registering with the network and/or applying for network user plane resources and other functions; or may be a network element with functions such as network registration and/or application for network user plane resources; or may be a software instance with functions such as network registration and/or application for network user plane resources, etc. The terminal control plane entity 200 may be deployed as a physical device or a virtual device. For example, a network element is developed in the network control plane device as the terminal control plane entity, etc.

The terminal control plane entity in some embodiments of the present application is directly connected to at least one network element in the network control plane device to implement interaction.

In an optional manner of embodiments of the present application, the terminal control plane entity may interact with at least one network element in the network control plane device in a point-to-point communication manner or in a service-oriented manner.

The terminal user plane entity 201 is a device for implementing the wireless communication function. For example, the user plane device may be a terminal or a chip that can be used in a terminal, and may be deployed on land, including indoor or outdoor, handheld or vehicle-mounted; or may be deployed on the water (such as ship, etc.); or may be deployed in the air (e.g., on airplane, balloon and satellite, etc.). Here, the terminal may be a User Equipment (UE), access terminal, terminal unit, terminal station, mobile radio station, mobile station, remote station, remote terminal, mobile device, wireless communication device, terminal agent or terminal device or the like in the 4G network, 5G network or future evolved Public Land Mobile Network (PLMN). The access terminal may be a cellular phone, a cordless phone, a Session Initiation Protocol (SIP) phone, a Wireless Local Loop (WLL) station, a Personal Digital Assistant (PDA), a handheld device with wireless communication function, a computing device or other processing device connected to a wireless modem, a vehicle-mounted device or a wearable device, a Virtual Reality (VR) terminal device, an Augmented Reality (AR) terminal device, a wireless terminal in industrial control, a wireless terminal in self driving, a wireless terminal in remote medical, a wireless terminal in smart grid, a wireless terminal in transportation safety, a wireless terminal in smart city, a wireless terminal in smart home, etc. The terminal device may be mobile or fixed.

In an optional manner of embodiments of the present application, the terminal user plane entity described in embodiments of the present application may switch between different communication systems. For example, the terminal user plane system may switch from a 4G communication system to a 5G communication system, or may also switch from a 5G communication system to a 4G communication system.

In an optional manner of embodiments of the present application, the terminal user plane entity 201 may be understood as a terminal device that only integrates the user plane, that is, does not include the control plane.

The network control plane device 202 is configured to process and forward signaling.

Exemplarily, assuming that the communication transmission system described in the embodiment of the present application is a variant based on the 4G system, a network control plane device is, for example, a Mobility Management Entity (MME) in the 4G system. The MME is a key control node of the access network of the LTE system defined in the 3rd Generation Partnership Project (3GPP) protocol, and is responsible for the positioning and paging process (including relay) of the terminal device in the idle mode. In brief, the MME is a network control plane device responsible for signaling processing.

Alternatively, assuming that the communication transmission system described in the embodiment of the present application is a variant based on the 5G system, the network elements in the network control plane device 202 in the 5G system may include some or all of, but specifically not limited to: Session Management Function (SMF), Authentication Management Function (AMF), Policy Control Function (PCT), User Plane Function (UPF), Unified Data Management (UDM), etc.

In the actual deployment, the network elements in the network control plane device may be co-located. For example, the mobility management network element may be co-located with the session management network element; the session management network element may be co-located with the user plane network element; the policy control network element and the unified data management network element may be co-located. When two network elements are co-located, the interaction between the two network elements provided by embodiments of the present application becomes the internal operation of the co-located network element or may be omitted.

Here, in the communication system described in embodiments of the present application or in a future communication system such as a 6G communication system, the above-mentioned network elements or devices may still use their names in the 4G or 5G communication system, or have other names; and the functions of the above-mentioned network elements or devices may be completed by an independent network element or jointly completed by several network elements, which is not limited in the embodiment of the present application.

The network user plane device 203 is configured to process and forward data.

Exemplarily, the network user plane device may be a server with functions such as mobility management, routing and forwarding for the user plane data, and is generally located on the network side, such as a Serving Gateway (SGW) or Packet data network Gateway (PGW) or User Plane Function (UPF), etc.

It should be noted that the above-mentioned "network element" may also be referred to as entity, device, apparatus or module, etc., which is not particularly limited in the present application. Moreover, in the present application, for the convenience of understanding and explanation, the description of "network element" is omitted in some parts, for example, the AMF network element is called AMF for short. In this case, the "AMF network element" should be understood as the AMF network element or AMF entity. The description of the same or similar situations will be omitted below. It can be understood that the above-mentioned network elements or functions may be network elements in hardware devices, or software functions running on the dedicated hardware, or virtualization functions instantiated on a platform (for example, cloud platform). Optionally, the above-mentioned network elements or functions may be implemented by one device, or may be jointly implemented by multiple devices, or may be a functional module in one device, which is not specifically limited in the embodiments of the present application. Here, the network elements with the same or similar functions may be jointly configured.

It should be understood that the above-mentioned network architecture applied to the present application is only an exemplary network architecture described from the perspective of service-oriented architecture, and the network architecture applicable to the embodiments of the present application is not limited thereto. Any network architecture that can realize the functions of the above-mentioned network elements is applicable to embodiments of the present application.

The network architectures and service scenarios described in embodiments of the present application are intended to illustrate the technical solutions of embodiments of the present application more clearly, and do not constitute a limitation on the technical solutions provided in the embodiments of the present application. As can be known by those ordinary skilled in the art, with the evolution of network architectures and the emergence of new service scenarios, the technical solutions provided in the embodiments of the present application are also applicable to similar technical problems.

Here, the above FIG. 2 is only a simplified schematic diagram for easy understanding, and the network architecture may also include other devices (network elements), which are not shown in FIG. 2. For example, in an optional manner of the embodiment of the present application, the communication system may further include a Radio Access Network (RAN) device, a Data Network (DN) device, etc.

Here, the access network device is a device that provides the wireless communication function for the user plane device. For example, the access network device includes, but is not limited to: Next Generation RAN (NG-RAN), gnodeB (gNB), evolved Node B (eNB), Radio Network Controller (RNC), Node B (NB), Base Station Controller (BSC), Base Transceiver Station (BTS), home base station (for example, home evolved NodeB or Home Node B (HNB)), Base Band Unit (BBU), Transmitting and Receiving Point (TRP), Transmitting Point (TP), mobile switching center, etc.

The data network may include operator services, Internet or third-party services, etc., or serve as an access point for the aforementioned services.

Some terms involved in embodiments of the present application will be explained below for easy understanding.
(1) The user plane network element is mainly used to forward user data packets according to the routing rule of the session management network element. In the 4G communication system, the user plane network element may be Serving Gateway User plane (SGW-U) or Packet data network Gateway User plane (PGW-U) or a network element with SGW-U and PGW-U co-located. In the 5G communication system, the user plane network element may be a User Plane Function (UPF) network element.
(2) The mobility management network element is mainly used for mobility management in the mobile network, such as user location update, user registration network, user switching, etc. In the 4G communication system, the mobility management network element may be a Mobility Management Entity (MME). In the 5G communication system, the mobility management network element may be an Access and Mobility management Function (AMF).
(3) The session management network element is mainly used for session management in the mobile network, such as session establishment, modification and release. Specific functions include, for example, assigning an Internet Protocol (IP) address to a user, selecting a user plane network element that provides the message forwarding function, etc. In the 4G communication system, the session management network element may be Serving Gateway Control plane (SGW-C) or Packet data network Gateway Control plane (PGW-C) or a network element with SGW-C and PGW-C co-located. In the 5G system, the session management network element may be a Session Management Function (SMF).
(4) The policy control network element contains user subscription data management function, policy control function, charging policy control function, Quality of Service (QoS) control, etc. In the 4G communication system, the policy control network element may be a Policy Control and Charging Function (PCRF). In the 5G communication system, the policy control network element may be a Policy Control Function (PCF).
(5) The unified data management network element is a network element responsible for managing the subscription information of terminal devices. In the 4G communication system, the unified data management network element may belong to a Home Subscriber Server (HSS). In the 5G communication system, the unified data management network element may be Unified Data Management (UDM).
(6) The application function network element is mainly responsible for providing services to the 3GPP network, for example, affecting the service routing, interacting with the PCF for policy control, etc. In the 5G communication system, the application function network element may be an Application Function (AF) network element.
(7) The network capability exposure network element is mainly used to open the capabilities of the communication system to third parties, application service functions, etc., and to transfer information among the third parties, application servers and communication system. In the 4G communication system, the network capability exposure network element may be a Service Capability Exposure Function (SCEF). In the 5G communication system, the network capability exposure network element may be a Network Exposure Function (NEF).

Here, the term "at least one" in the embodiments of the present application refers to one or more, and "multiple" refers to two or more. "And/or" describes the association relationship of the associated objects, and indicates that there may be three relationships, for example, A and/or B may represent: only A, both A and B, and only B, where A and B may be singular or plural. The character "/" generally indicates that the associated objects have a kind of "or" relationship. "At least one (item) of" or similar expression refers to any combination of these items, including any combination of single (item) or multiple (items). For example, at least one (item) of a, b or c may represent: a, b, c, a-b, a-c, b-c, or a-b-c, where a, b and c may be single or multiple.

Unless stated to the contrary, the ordinal numbers such as "first" and "second" mentioned in the embodiments of the present application are used to distinguish a plurality of objects, and are not used to limit the order, sequence, priority or importance of the plurality of objects.

Moreover, the terms "include" and "have" in the embodiments, claims and drawings of the present application are not exclusive. For example, a process, method, system, product or device that includes a series of steps or modules is not limited to the listed steps or modules, and may also include unlisted steps or modules.

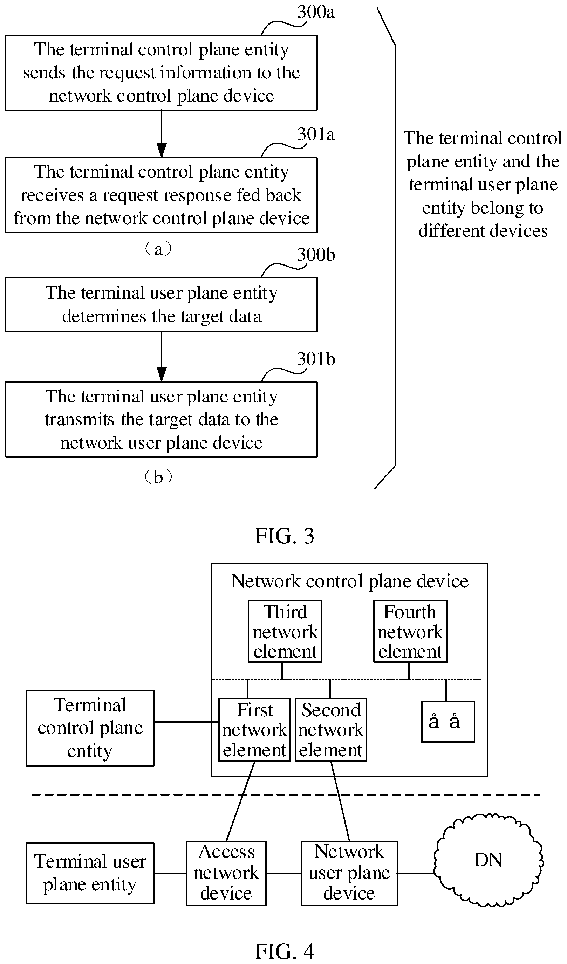

Further, an embodiment of the present application provides a communication transmission method. Here, for the terminal control plane entity, as shown in (a) in FIG. 3, the method includes:
300a: The terminal control plane entity sends the request information to the network control plane device;
301a: The terminal control plane entity receives a request response fed back from the network control plane device.

For the terminal user plane entity, as shown in (b) in FIG. 3, the method includes:
300b: The terminal user plane entity determines the target data;
301b: The terminal user plane entity transmits the target data to the network user plane device.

Here, the terminal control plane entity and the terminal user plane entity are located in different devices.

The communication transmission method, device and system described in the embodiments of the present application realize the separation of the terminal control plane from the user plane, reduce the cost and power consumption of the terminal control plane and the user plane effectively, realize the independent operation and management of the user plane and/or the control plane, and are more flexible and convenient. In addition, through the separation of the terminal control plane from the user plane, the terminal control plane can directly interact with the network control plane device, reducing the interaction delay and process time effectively.

In the following, some embodiments of the present application are respectively described based on different entities in the communication transmission system, and are not specifically limited to the following improvements.

### 1. The terminal control plane entity.

Here, the terminal control plane entity in embodiments of the present application may be connected to the network control plane device in various manners, which are specifically but not limited to follows.

In a first connection manner: the terminal control plane entity is connected to the network control plane device in a point-to-point manner.

In a second connection manner: the terminal control plane entity is connected to the network control plane device in a service-oriented manner.

In addition, the terminal control plane entity in embodiments of the present application may correspond to at least one terminal user plane entity.

### 2. The terminal user plane entity.

Here, the terminal user plane entity in embodiments of the present application may be connected to the network user plane device in various manners, which are specifically but not limited to follows.

In a first connection manner: the terminal user plane entity accesses the network user plane device wirelessly.

For example, the terminal user plane entity performs data transmission with the network user plane device through a wirelessly-connected access network device.

In a second connection manner: the terminal user plane entity is connected to the network user plane device in a wired manner.

In a third connection manner: the terminal user plane entity is connected to the network user plane device in the wired and wireless manners.

### 3. The network control device.

Here, the network elements in the network control device in the embodiments of the present application may communicate with each other in various manners, which are specifically but not limited to follows.

In a first communication manner: the network elements in the network control device may communicate with each other in a point-to-point manner.

In a second communication manner: the network elements in the network control device may communicate with each other in a service-oriented manner.

It should be noted that the communication transmission scenario described in embodiments of the present application may be any combination of the improvement points corresponding to the above entities, which is not specifically limited in embodiments of the present application.

Here, the communication transmission method described in the present application is applicable to various communication transmission scenarios. In order to better understand the communication transmission method described in embodiments of the application, some embodiments of the present application will be introduced for different communication scenarios selected, which are specifically but not limited to the following types.

In an embodiment of the present application, the control plane and the user plane of the terminal are separated into a terminal user plane entity and a terminal control plane entity.

In an optional manner of the embodiment of the present application, the terminal user plane entity is used to transmit data, where a data transmission path is determined by a network user plane device. The terminal control plane entity is used to interact with the network elements in the network control plane device to implement network registration, network authorization, and application for network user plane resources, etc., where the interaction and coding mode between the terminal control plane entity and the network elements in the network control plane device are not limited in the embodiment of the present application.

Communication scenario 1: the terminal control plane entity interacts with the network elements in the network control plane device in the point-to-point manner.

Here, based on the communication scenario 1, the communication transmission in some embodiments of the present application may be divided into various types of cases, which are specifically but not limited to follows.

Case 1: The terminal user plane entity accesses the network user plane device wirelessly.

In an optional manner of the embodiment of the present application, the communication system for communication transmission in the embodiment of the present application may include an access network device.

Here, the access network device in some embodiments of the present application may be used to forward the data of the terminal user plane entity, etc.

Exemplarily, in the communication system, the terminal user plane entity accesses the network user plane equipment through the access network device. The terminal user plane entity may transmit data to the network user plane device through the access network device.

In an optional manner, based on the case 1 in the scenario 1, as shown in FIG. 4, the terminal control plane entity may be connected to a first network element in the network control plane device in the point-to-point manner. Some or all of the network elements in the network control plane device interact with each other in the service-oriented manner.

Here, the first network element may be a network element with the access function.

Exemplarily, when the communication transmission system in some embodiments of the present application is improved based on the existing 5G system, the first network element may be an AMF network element.

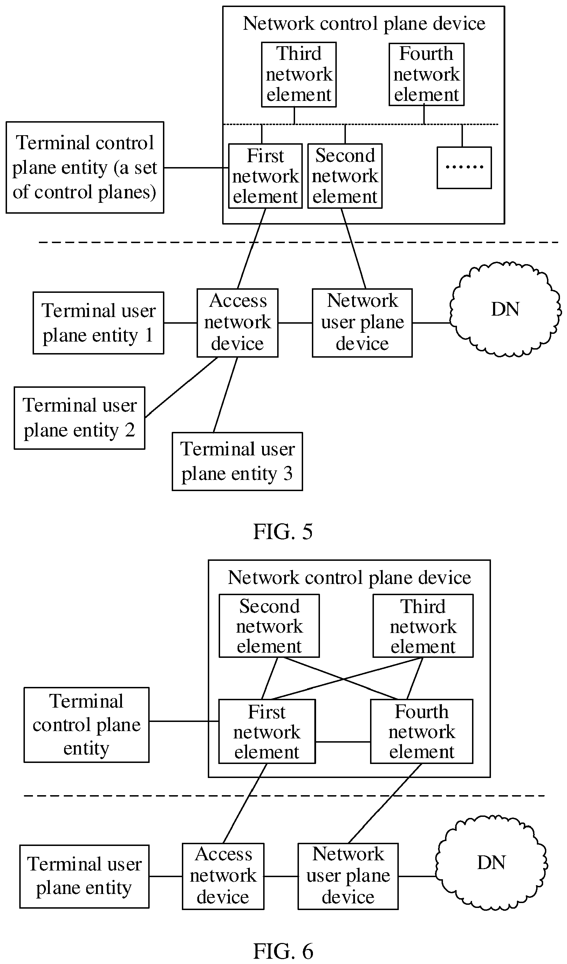

Moreover, in some embodiments of the present application, the terminal control plane entity may be the control plane of one terminal as shown in FIG. 4 above, or may be a set of control planes of multiple terminals as shown in FIG. 5. For example, it is assumed that the terminal control plane entity is a set of control planes corresponding to the terminal user plane entity 1 to the terminal user plane entity 3.

It can be understood that the terminal control device corresponds to at least one terminal user plane entity when the terminal control device is a set of at least one terminal control plane.

In another optional manner, based on the case 1 in the scenario 1, as shown in FIG. 6, the terminal control plane entity may be connected to a network element with the access function in the network control plane device in the point-to-point manner. Some or all of the network elements in the network control plane device communicate with each other in the point-to-point manner.

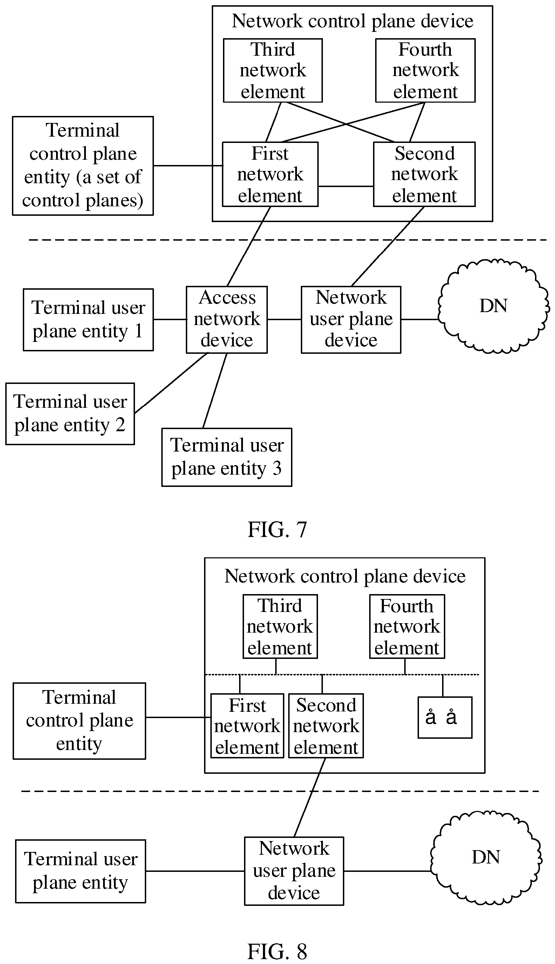

Moreover, in some embodiments of the present application, the terminal control plane entity may be the control plane of one terminal as shown in FIG. 6 above, or may be a set of control planes of multiple terminals as shown in FIG. 7. For example, it is assumed that the terminal control plane entity is a set of control planes corresponding to the terminal user plane entity 1 to the terminal user plane entity 3.

It can be understood that the terminal control plane entity corresponds to at least one terminal user plane entity when the terminal control plane entity is a set of at least one terminal control plane.

It should be noted that the embodiment of the present application does not limit which network elements in the network control plane device are in point-to-point connection with the terminal control plane entity. Each functional network element in the network control plane device may be selectively deployed as required, or the functions of the network elements may be combined.

Case 2: The terminal user plane entity accesses the network user plane device in the wired manner.

In an optional manner of embodiments of the present application, the communication system for communication transmission in embodiments of the present application includes no access network device. The terminal user plane entity performs data transmission with the network user plane device in the wired manner.

Exemplarily, in the communication system, the terminal user plane entity is directly connected to the network user plane device by wire, so as to realize the communication between the terminal user plane entity and the network user plane device.

In an optional manner, based on the case 2 in the scenario 1, as shown in FIG. 8, the terminal control plane entity may be connected to a first network element in the network control plane device in the point-to-point manner. Some or all of the network elements in the network control plane device interact with each other in the service-oriented manner.

Here, the first network element may be a network element with the access function.

Exemplarily, when the communication transmission system in embodiments of the present application is improved based on the existing 5G system, the first network element may be an AMF network element.

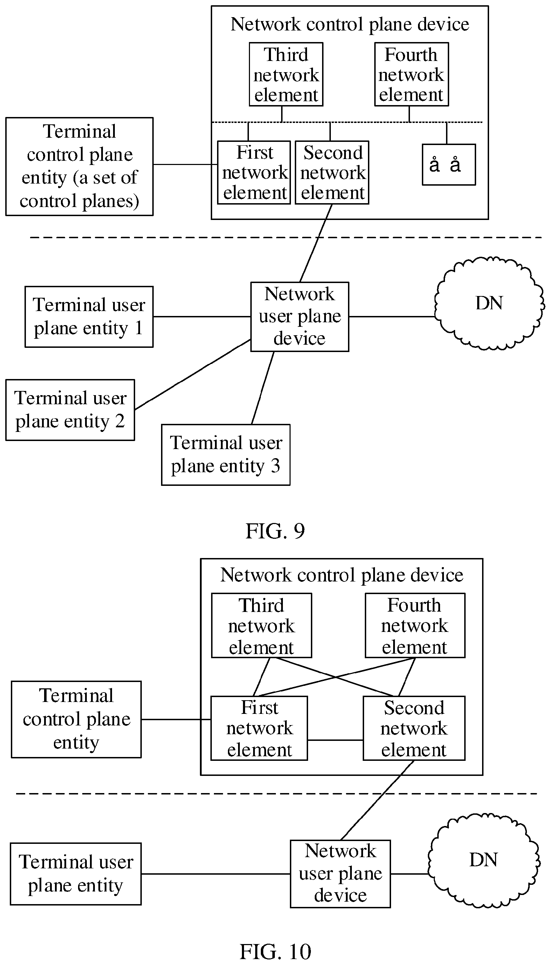

Moreover, in some embodiments of the present application, the terminal control plane entity may be the control plane of one terminal as shown in FIG. 8 above, or may be a set of control planes of multiple terminals as shown in FIG. 9. For example, it is assumed that the terminal control plane entity is a set of control planes corresponding to the terminal user plane entity 1 to the terminal user plane entity 3.

It can be understood that the terminal control plane entity corresponds to at least one terminal user plane entity when the terminal control plane entity is a set of at least one terminal control plane.

In another optional manner, based on the case 2 in the scenario 1, as shown in FIG. 10, the terminal control plane entity may be connected to a network element with the access function in the network control plane device in the point-to-point manner. Some or all of the network elements in the network control plane device communicate with each other in the point-to-point manner.

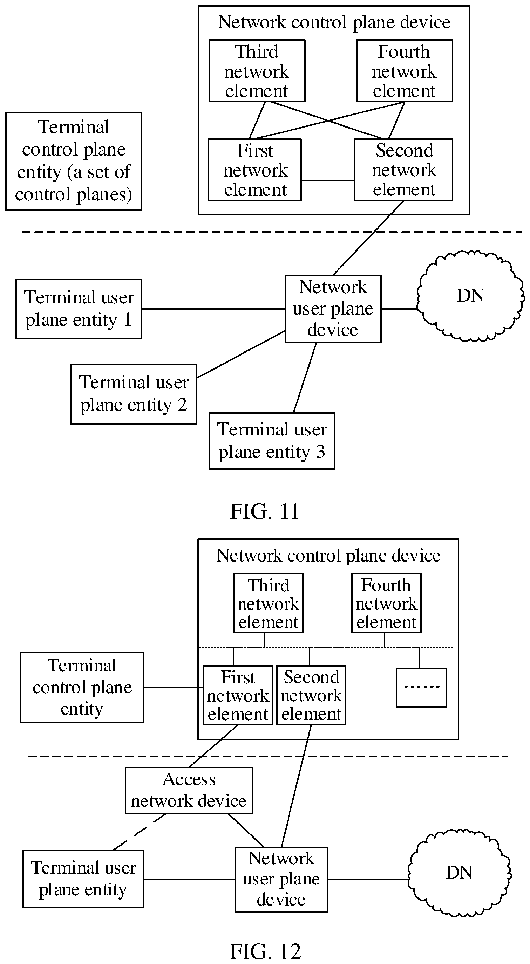

Moreover, in embodiments of the present application, the terminal control plane entity may be the control plane of one terminal as shown in FIG. 10 above, or may be a set of control planes of multiple terminals as shown in FIG. 11. For example, it is assumed that the terminal control plane entity is a set of control planes corresponding to the terminal user plane entity 1 to the terminal user plane entity 3.

It can be understood that the terminal control plane entity corresponds to at least one terminal user plane entity when the terminal control plane entity is a set of at least one terminal control plane.

It should be noted that embodiments of the present application does not limit which network elements in the network control plane device are in point-to-point connection with the terminal control plane entity.

Case 3: The terminal user plane entity accesses the network user plane device in the wired and wireless manners.

In an optional manner of embodiments of the present application, the communication system for communication transmission in the embodiment of the present application may include an access network device. The terminal user plane entity may be connected to the network user plane device through a wirelessly-connected access network device to realize the wireless connection between the terminal user plane entity and the network user plane device, and may also be directly connected to the network user plane device by wire to realize the communication between the terminal user plane entity and the network user plane device.

In an optional manner, based on the case 3 in the scenario 1, as shown in FIG. 12, the terminal control plane entity may be connected to a first network element in the network control plane device in the point-to-point manner. Some or all of the network elements in the network control plane device interact with each other in the service-oriented manner. Here, the first network element may be a network element with the access function.

Exemplarily, when the communication transmission system in embodiments of the present application is based on the existing 5G system, the first network element may be an AMF network element.

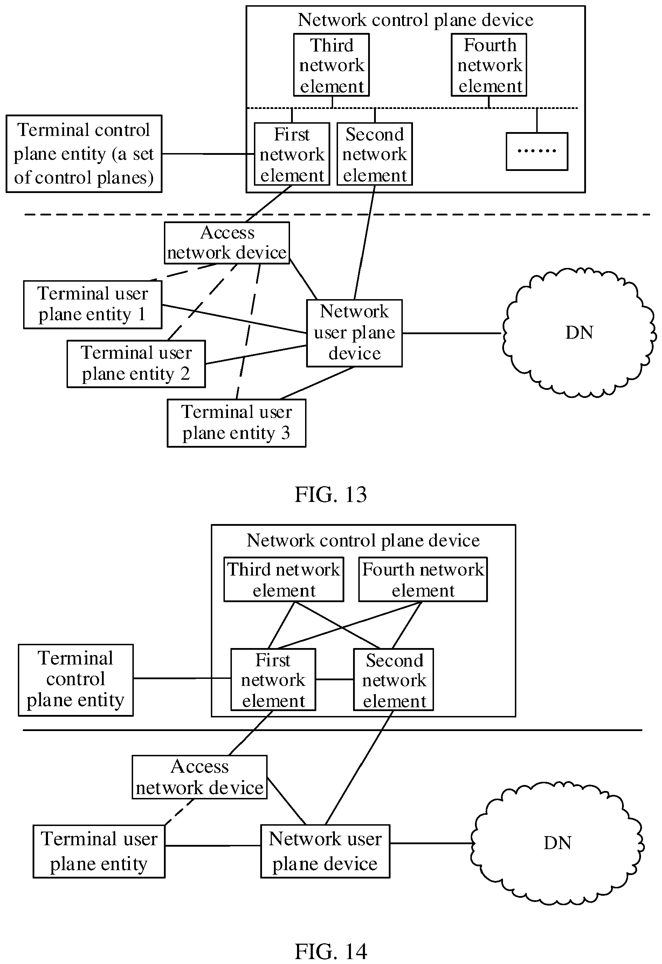

Moreover, in embodiments of the present application, the terminal control plane entity may be the control plane of one terminal as shown in FIG. 12 above, or may be a set of control planes of multiple terminals as shown in FIG. 13. For example, it is assumed that the terminal control plane entity is a set of control planes corresponding to the terminal user plane entity 1 to the terminal user plane entity 3.

It can be understood that the terminal control plane entity corresponds to at least one terminal user plane entity when the terminal control plane entity is a set of at least one terminal control plane.

In another optional manner, based on the case 3 in the scenario 1, as shown in FIG. 14, the terminal control plane entity may be connected to a network element with the access function in the network control plane device in the point-to-point manner. Some or all of the network elements in the network control plane device communicate with each other in the point-to-point manner.

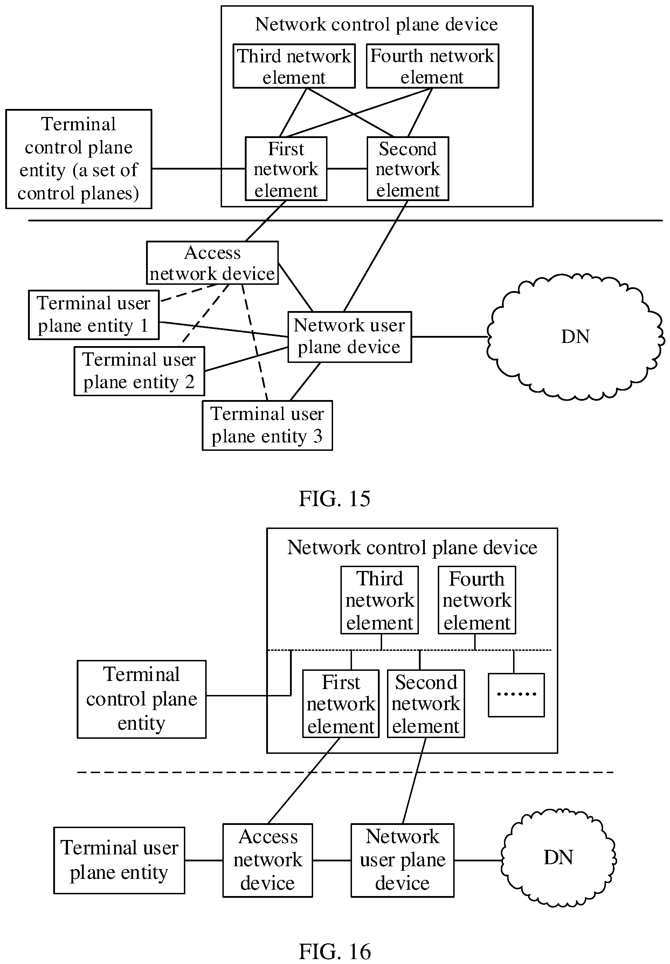

Moreover, in some embodiments of the present application, the terminal control plane entity may be the control plane of one terminal as shown in FIG. 14 above, or may be a set of control planes of multiple terminals as shown in FIG. 15.

It can be understood that the terminal control plane entity corresponds to at least one terminal user plane entity when the terminal control plane entity is a set of at least one terminal control plane.

It should be noted that embodiment of the present application does not limit which network elements in the network control plane device are in point-to-point connection with the terminal control plane entity.

Communication scenario 2: the terminal control plane entity interacts with the network elements in the network control plane device through a service interface.

Here, based on the communication scenario 2, the communication transmission in embodiments of the present application may be divided into various types of cases, which are specifically but not limited to follows.

Case 1: The terminal user plane entity accesses the network user plane device wirelessly.

In an optional manner of embodiments of the present application, the communication system for communication transmission in embodiments of the present application may include an access network device.

Here, the access network device in the embodiment of the present application may be used to forward the data of the terminal user plane entity, etc.

Exemplarily, in the communication system, the terminal user plane entity accesses the network user plane device through a wirelessly-connected access network device, and performs data transmission with the network user plane device.

In an optional manner, as shown in FIG. 16, the terminal control plane entity may access the network control plane device through a service interface. Here, after the terminal control plane entity accesses the network control plane device through the service interface, the terminal control plane entity is equivalent to a network element in the network control plane device, and may communicate with at least one network element of the network control plane device by invoking related services.

Exemplarily, when the communication transmission system in embodiments of the present application is improved based on the existing 5G system, the terminal control plane entity may communicate with network elements such as AMF and SMF by invoking related services.

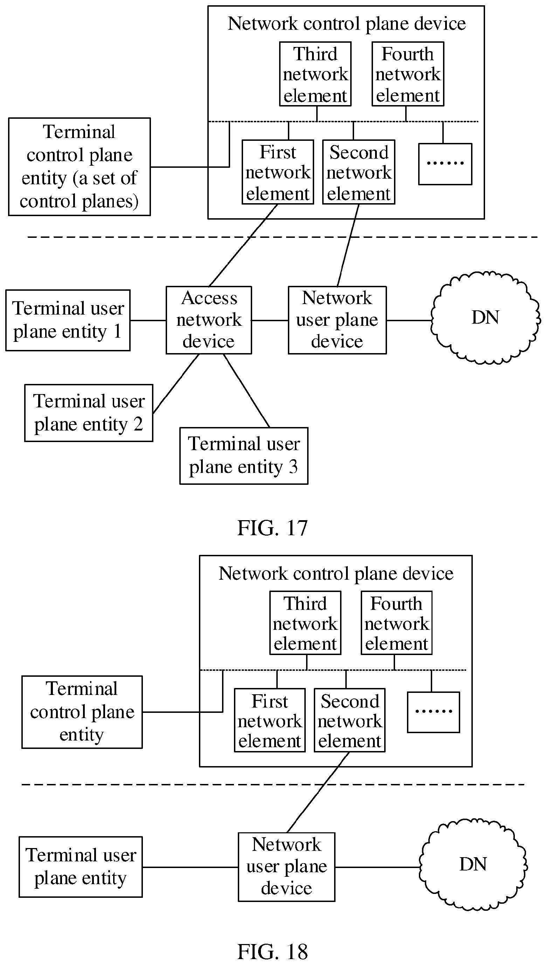

Moreover, in embodiments of the present application, the terminal control plane entity may be the control plane of one terminal as shown in FIG. 16 above, or may be a set of control planes of multiple terminals as shown in FIG. 17.

It can be understood that the terminal control plane entity corresponds to at least one terminal user plane entity when the terminal control plane entity is a set of at least one terminal control plane.

It should be noted that each functional unit in the network control plane device may be selectively deployed as required, or the functions of the units may be combined.

Case 2: The terminal user plane entity accesses the network user plane device in the wired manner.

In an optional manner of embodiments of the present application, the communication system for communication transmission in embodiments of the present application includes no access network device. The terminal user plane entity communicates with the wired network user plane device, etc.

Exemplarily, in the communication system, the terminal user plane entity is directly connected to the network user plane device by wire, so as to realize the communication between the terminal user plane entity and the network user plane device.

In an optional manner, as shown in FIG. 18, the terminal control plane entity may access the network control plane device through a service interface. Here, after the terminal control plane entity accesses the network control plane device through the service interface, the terminal control plane entity is equivalent to a network element in the network control plane device, and may communicate with at least one network element of the network control plane device by invoking related services.

Exemplarily, when the communication transmission system in embodiments of the present application is improved based on the existing 5G system, the terminal control plane entity may communicate with network elements such as AMF and SMF by invoking related services.

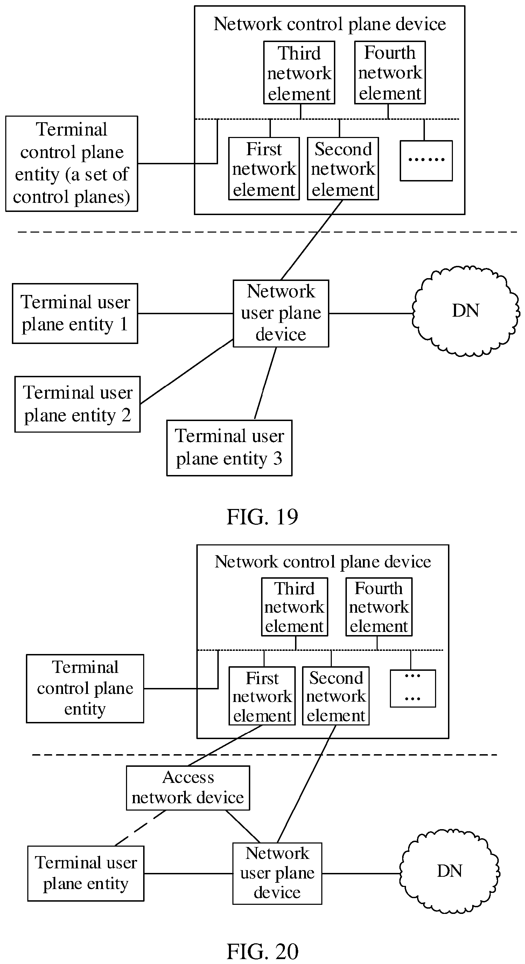

Moreover, in some embodiments of the present application, the terminal control plane entity may be the control plane of one terminal as shown in FIG. 18 above, or may be a set of control planes of multiple terminals as shown in FIG. 19.

It can be understood that the terminal control plane entity corresponds to at least one terminal user plane entity when the terminal control plane entity is a set of at least one terminal control plane.

It should be noted that each functional unit in the network control plane device may be selectively deployed as required, or the functions of the units may be combined.

Case 3: The terminal user plane entity accesses the network user plane device in the wireless and wired manners.

In an optional manner of embodiments of the present application, the communication system for communication transmission in embodiments of the present application may include an access network device. The terminal user plane entity may access the network user plane device through the access network device to perform data transmission with the network user plane device, and may also be directly connected to the network user plane device by wire to realize the communication between the terminal user plane entity and the network user plane device.

In an optional manner, as shown in FIG. 20, the terminal control plane entity may access the network control plane device through a service interface. Here, after the terminal control plane entity accesses the network control plane device through the service interface, the terminal control plane entity is equivalent to a network element in the network control plane device, and may communicate with at least one network element of the network control plane device by invoking related services.

Exemplarily, when the communication transmission system in embodiments of the present application is improved based on the existing 5G system, the terminal control plane entity may communicate with network elements such as AMF and SMF by invoking related services.

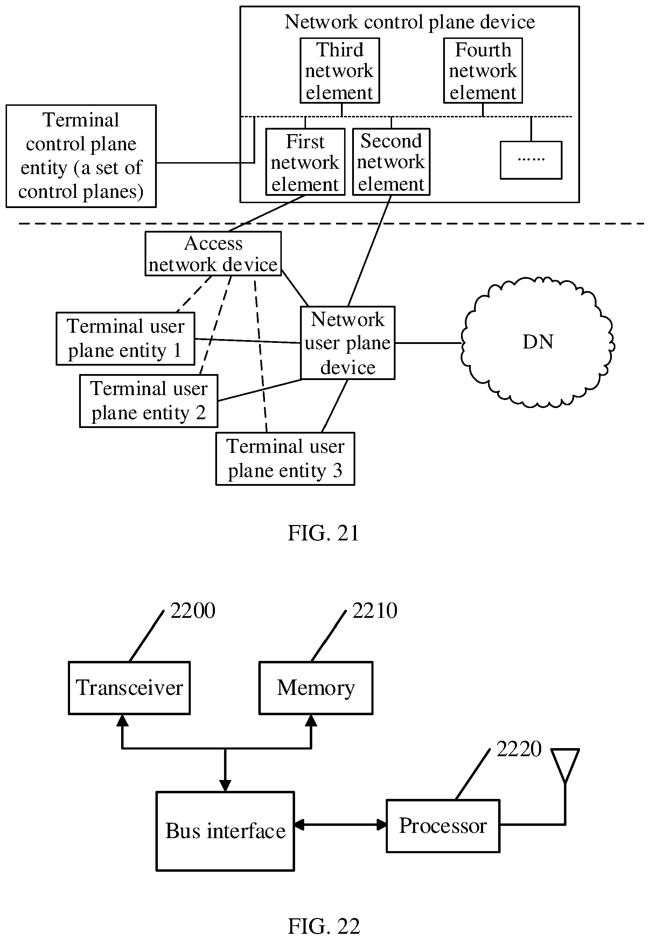

Moreover, in embodiments of the present application, the terminal control plane entity may be the control plane of one terminal as shown in FIG. 20 above, or may be a set of control planes of multiple terminals as shown in FIG. 21.

It can be understood that the terminal control plane entity corresponds to at least one terminal user plane entity when the terminal control plane entity is a set of at least one terminal control plane.

It should be noted that each functional unit in the network control plane device may be selectively deployed as required, or the functions of the units may be combined.

The communication transmission method, device and system described in the embodiments of the present application realize the separation of the terminal control plane from the user plane, reduce the cost and power consumption of the terminal control plane and the user plane effectively, realize the independent operation and management of the user plane and/or the control plane, and are more flexible and convenient. In addition, through the separation of the terminal control plane from the user plane, the terminal control plane can directly interact with the network control plane device, reducing the interaction delay and process time effectively.

Through the above introduction to the solution of the present application, it can be understood that, in order to realize the above functions, the above devices include the corresponding hardware structures and/or software modules for performing the functions. Those skilled in the art should easily realize that the present application can be implemented in the form of hardware or a combination of hardware and computer software in combination with the units and algorithm steps of the examples described in the embodiments disclosed herein. Whether a certain function is executed by hardware or by computer software driving hardware depends on the specific application and design constraints of the technical solution. Those skilled in the art may use different methods to implement the described functions for each specific application, but such implementation should not be regarded as going beyond the scope of the present application.

As shown in FIG. 22, an embodiment of the present application provides a communication transmission device, which includes a processor 2200, a memory 2210 and a transceiver 2220.

The processor 2200 is responsible for managing the bus architecture and general processing, and the memory 2210 may store the data used by the processor 2200 when performing the operations. The transceiver 2220 is configured to receive and send the data under the control of the processor 2200.

The bus architecture may include any numbers of interconnected buses and bridges, and specifically link various circuits of one or more processors represented by the processor 2200 and the memory represented by the memory 2210. The bus architecture may further link various other circuits such as peripheral device, voltage regulator and power management circuit, which are all well known in the art and thus will not be further described again herein. The bus interface provides an interface. The processor 2200 is responsible for managing the bus architecture and general processing, and the memory 2210 may store the data used by the processor 2200 when performing the operations.

The procedure disclosed by the embodiment of the present application may be applied in the processor 2200 or implemented by the processor 2200. In the implementation process, each step of the signal processing flow may be completed by the integrated logic circuit of hardware in the processor 2200 or the instruction in the form of software. The processor 2200 may be a general-purpose processor, a digital signal processor, an application specific integrated circuit, a field programmable gate array or other programmable logic device, a discrete gate or transistor logic device, or a discrete hardware component, and may implement or perform each method, step and logical block diagram disclosed in the embodiments of the present application. The general-purpose processor may be a microprocessor or any conventional processor or the like. The steps of the method disclosed in combination with the embodiments of the present application may be directly completed by a hardware processor, or completed by a combination of hardware and software modules in the processor. The software modules may be located in the random access memory, flash memory, read only memory, programmable read only memory or electrically erasable programmable read only memory, register and other mature storage medium in the art. The storage medium is located in the memory 2210, and the processor 2200 reads the information in the memory 2210 and completes the steps of the signal processing flow in combination with its hardware.

Here, in an optional case of the embodiment of the present application, when the communication transmission device is a terminal control plane entity, the processor 2200 is configured to read the program in the memory 2210 to:
send request information to a network control plane device through a service interface; or send the request information to at least one network element in point-to-point connection with the network control plane device; and receive a request response fed back from the network control plane device.

In another optional case of the embodiment of the present application, when the communication transmission device is a terminal user plane entity, the processor 2200 is configured to read the program in the memory 2210 to:
determine target data; and send the target data to a network user plane device through a wirelessly-connected access network device; and/or send the target data to the network user plane device connected by wire.

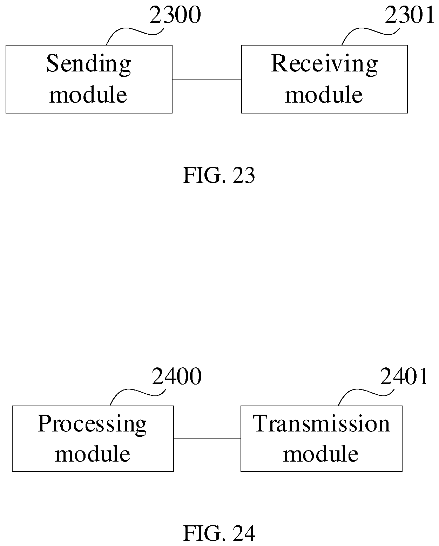

As shown in FIG. 23, the present application provides a terminal control plane entity, which includes:
a sending module 2300 configured to send request information to a network control plane device through a service interface; or send the request information to at least one network element in point-to-point connection with the network control plane device;
a receiving module 2301 configured to receive a request response fed back from the network control plane device.

In an optional embodiment of the present application, the terminal control plane entity is in the form of a network element; or the terminal control plane entity is in the form of a software program.

As shown in FIG. 24, the present application provides a terminal control plane entity, which includes:
a processing module 2400 configured to determine target data;
a transmission module 2401 configured to send the target data to a network user plane device through a wirelessly-connected access network device; and/or send the target data to the network user plane device connected by wire.

In some possible embodiments, various aspects of the communication transmission method provided in embodiments of the present application can also be implemented in the form of a program product, which includes program codes. When the program product runs on a computer device, the program codes are configured to cause the computer device to perform the steps in the communication transmission method according to various exemplary embodiments of the present application described in this specification.

The program product can use any combination of one or more readable media. The readable medium may be a readable signal medium or a readable storage medium. The readable storage medium may be, for example but not limited to, electrical, magnetic, optical, electromagnetic, infrared, or semiconductor system, apparatus or device, or any combination thereof. More specific examples of the readable storage media (non-exhaustive list) include: electrical connection with one or more wires, portable disk, hard disk, Random Access Memory (RAM), Read Only Memory (ROM), Erasable Programmable Read Only Memory (EPROM) or flash memory, optical fiber, portable Compact Disk-Read Only Memory (CD-ROM), optical storage device, magnetic storage device, or any suitable combination thereof.

The program product for the communication transmission according to the embodiment of the present application may adopt a portable Compact Disk-Read Only Memory (CD-ROM) and include program codes, and may be run on a server device. However, the program product of the present application is not limited to this. In this document, the readable storage medium can be any tangible medium that contains or stores a program, where the program can be used by or used in combination with the information transmission apparatus or device.

The readable signal medium may include data signals propagated in the baseband or as a part of carrier waves, and the readable program codes are carried therein. Such propagated data signals can be in many forms, including but not limited to electromagnetic signals, optical signals, or any suitable combination thereof. The readable signal medium may also be any readable medium other than the readable storage medium, and the readable medium may send, propagate or transmit the programs used by or used in combination with the periodic network action system, apparatus or device.

The program codes contained on the readable medium can be transmitted by any suitable medium, including but not limited to wireless, wired, optical cable, RF, etc., or any suitable combination thereof.

The program codes for performing the operations of the present application can be compiled in any combination of one or more programming languages, where the programming languages include the object-oriented programming languages such as Java, C++, etc., and also include the conventional procedural programming languages such as "C" language or similar programming languages. The program codes can be executed entirely on a user computing device, executed partly on a user computing device, executed as an independent software package, executed partly on a user computing device and partly on a remote computing device, or executed entirely on a remote computing device or server. In the case of a remote computing device, the remote computing device can be connected to the user computing device through any kind of network including Local Area Network (LAN) or Wide Area Network (WAN), or can be connected to an external computing device.

An embodiment of the present application further provides a computing device readable storage medium for the communication transmission method on the terminal side, that is, the content is not lost after power off. The storage medium stores a software program including program codes, and when the program codes run on a computing device, the software program can implement the solution of any above communication transmission device on the terminal side in the embodiments of the present application when being read and executed by one or more processors.

An embodiment of the present application further provides a computing device readable storage medium for the communication transmission method on the network side, that is, the content is not lost after power off. The storage medium stores a software program including program codes, and when the program codes run on a computing device, the software program can implement the solution of any above communication transmission device on the network side in the embodiments of the present application when being read and executed by one or more processors.

In the above-mentioned embodiments of the present application, in order to realize the functions in the above methods provided in the embodiments of the present application, the data transmission device may include hardware structures and/or software modules, and implement the above-mentioned functions in the form of hardware structure, software module, or hardware structure plus software module. Whether a certain function among the above-mentioned functions is executed by way of hardware structure, software module, or hardware structure plus software module depends on the specific application and design constraints of the technical solution.

The present application has been described above by reference to the block diagrams and/or flow charts showing the methods, devices (systems) and/or computer program products according to the embodiments of the present application. It should be understood that one block shown in the block diagrams and/or flow charts and a combination of the blocks shown in the block diagrams and/or flow charts can be implemented by the computer program instructions. These computer program instructions can be provided to a general-purpose computer, a processor of a dedicated computer and/or another programmable data processing unit to produce a machine, so that the instructions executed by the computer processor and/or another programmable data processing unit create the methods for implementing the functions and/or actions specified in the blocks of the block diagrams and/or flow charts.

Accordingly, the present application can also be implemented by the hardware and/or software (including the firmware, resident software, microcode and the like). Further, the present application can adopt the form of computer program products on the computer usable or computer readable storage medium, which has the computer usable or computer readable program codes implemented in the medium, to be used by the instruction execution system or used in combination with the instruction execution system. In the context of the present application, the computer usable or computer readable storage medium can be any medium, which can contain, store, communicate with, transmit or transfer the programs, to be used by the instruction execution system, apparatus or device, or used in combination with the instruction execution system, apparatus or device.

Evidently those skilled in the art can make various modifications and variations to the present application without departing from the spirit and scope of the present application. Thus the present application is also intended to encompass these modifications and variations therein as long as these modifications and variations to the present application come into the scope of the claims of the present application and their equivalents.

## Claims

1. A communication transmission system, comprising:
a terminal control plane entity configured to perform a signaling transmission with a network control plane device;
a terminal user plane entity configured to perform a data transmission with a network user plane device;
the network control plane device configured to process and forward a signaling sent from the terminal control plane entity;
the network user plane device configured to process and forward a data from the terminal user plane entity;
wherein the terminal control plane entity and the terminal user plane entity are located in different devices.

2. The system according to claim 1, wherein the terminal control plane entity is in point-to-point connection with at least one network element in the network control plane device; or
the terminal control plane entity is connected to the network control plane device through a service interface.

3. The system according to claim 2, wherein the terminal control plane entity is in point-to-point connection with a network element with an access function in the network control plane device.

4. The system according to any one of claims 1 to 3, wherein the terminal user plane entity performs the data transmission with the network user plane device through a wirelessly-connected access network device; and/or
the terminal user plane entity performs the data transmission with the network user plane device connected to the terminal user plane entity by wire.

5. The system according to any one of claims 1 to 4, wherein terminal control plane entities are in one-to-one correspondence to terminal user plane entities; or
a terminal control plane entity corresponds to a plurality of terminal user plane entities.

6. A communication transmission method using the system according to any one of claims 1 to 5, comprising:
sending, by the terminal control plane entity, a request information to the network control plane device;
receiving, by the terminal control plane entity, a request response fed back from the network control plane device.

7. The method according to claim 6, wherein the sending, by the terminal control plane entity, a request information to the network control plane device, comprises:
sending, by the terminal control plane entity, the request information to the network control plane device through a service interface; or
sending, by the terminal control plane entity, the request information to at least one network element in point-to-point connection with the network control plane device.

8. The method according to claim 7, wherein the sending, by the terminal control plane entity, the request information to at least one network element in point-to-point connection with the network control plane device, comprises:
sending, by the terminal control plane entity, the request information to a network element with an access function in the network control plane device.

9. A communication transmission method using the system according to any one of claims 1 to 5, comprising:
determining, by the terminal user plane entity, a target data;
transmitting, by the terminal user plane entity, the target data to the network user plane device.

10. The method according to claim 9, wherein the transmitting, by the terminal user plane entity, the target data to the network user plane device, comprises:
sending, by the terminal user plane entity, the target data to the network user plane device through a wirelessly-connected access network device; and/or
sending, by the terminal user plane entity, the target data to the network user plane device connected to the terminal user plane entity by wire.

11. A terminal control plane entity, comprising: a processor, a memory and a transceiver;
wherein the processor is configured to read a program in the memory to:
send a request information to a network control plane device through a service interface; or send a request information to at least one network element in point-to-point connection with the network control plane device;
receive a request response fed back from the network control plane device.

12. A terminal user plane entity, comprising: a processor, a memory and a transceiver;
wherein the processor is configured to read a program in the memory to:
determine a target data;
transmit the target data to a network user plane device through a wirelessly-connected access network device; and/or send the target data to the network user plane device connected to the terminal user plane entity by wire.

13. A terminal control plane entity, comprising:
a sending module configured to send a request information to a network control plane device through a service interface; or send a request information to at least one network element in point-to-point connection with the network control plane device;
a receiving module configured to receive a request response fed back from the network control plane device.

14. A terminal user plane entity, comprising:
a processing module configured to determine a target data;
a transmission module configured to send the target data to a network user plane device through a wirelessly-connected access network device; and/or send the target data to the network user plane device connected to the terminal user plane entity by wire.

15. A computer readable storage medium storing a computer program thereon, wherein the program, when executed by a processor, implements steps of the method of any one of claims 6-8 or steps of the method of claim 9 or 10.
